**Europäisches Patentamt**

**European Patent Office**

**Office européen des brevets**

(19)

(11) Veröffentlichungsnummer: **0 146 156**
**B1**

## EUROPÄISCHE PATENTSCHRIFT

(45) Veröffentlichungstag der Patentschrift:
04.01.89

(21) Anmeldenummer: **84201575.2**

(22) Anmeldetag: **01.11.84**

(51) Int. Cl.⁴: **H 01 R 13/52,** H 01 R 13/58,
H 02 G 15/24

(54) **Kunststoffkabelumhüllung.**

(30) Priorität: **03.11.83 NL 8303796**

(43) Veröffentlichungstag der Anmeldung:
**26.06.85 Patentblatt 85/26**

(45) Bekanntmachung des Hinweises auf die Patenterteilung:
**04.01.89 Patentblatt 89/1**

(84) Benannte Vertragsstaaten:
**AT BE CH DE FR GB IT LI LU NL SE**

(56) Entgegenhaltungen:
**CH-A-548 125**
**DE-A-2 953 463**
**DE-U-8 107 172**
**GB-A-1 520 150**

(73) Patentinhaber: **WAVIN B.V., Händellaan 251, NL-8031 EM Zwolle (NL)**

(72) Erfinder: **Fehrmann, Heinrich, Oster Escher Fleer 17, D-4472 Haren 1 (DE)**
Erfinder: **Irmer, Adolf, Oelwerkstrasse 101, D-4478 Geeste 1 (DE)**
Erfinder: **Guettouche, Ali, Johannesstrasse 7, D-4472 Haren (DE)**

(74) Vertreter: **van der Veken, Johannes Adriaan, EXTERPATENT B.V. P.O. Box 90649, NL- 2509 LP 's- Gravenhage (NL)**

EP 0 146 156 B1

## Beschreibung

Die Erfindung bezieht sich auf eine Kunststoffkabelumhüllung, bestehend aus einem Kunststoffrohr zur Aufnahme eines Kabels zum Übertragen von Signalen, einem mit dem Kunststoffrohr verbundenen, Zugfestigkeit vermittelnden rohrförmigen Kupplungsorgan mit einem mit einer Wand des Kunststoffrohres zusammenwirkenden Endrand und mit einer ringförmigen Aussparung, die von einem Boden, einer inneren Aussparungswand und einer äusseren Aussparungwand begrenzt ist, die von einem stirnseitigen Ende einer mit der Wand des rohrförmigen Kupplungsorgans zusammenwirkenden, ein in der ringförmigen Aussparung aufgenommenes Dichtungsorgan zwischen der inneren und der äusseren Aussparungswand zusammendrückenden Andruckmutter gebildet ist.

Eine solche Kunststoffkabelumhüllung ist bekannt.

Das ringförmige Dichtungsorgan, das mit dem in der Kabelumhüllung angebrachten Kabel dichtend zusammenwirkt, um die Innenseite der Kabelumhüllung feuchtigkeits- und gasdicht gegenüber der Umgebung abzuschliessen, ist dabei in einer ringförmigen Aussparung aufgenommen, die von einem rohrförmigen Kupplungsorgan und von einer in dessen Innenseite geschraubten Andruckmutter gebildet ist. Zum zugfesten Verbinden des rohrförmigen Kupplungsorgans mit der Kunststoffkabelumhüllung ist die Aussenseite des rohrförmigen Kupplungsorgans mit zahnförmigen Erhöhungen versehen, während der Aussendurchmesser des rohrförmigen Kupplungsorgans grösser ist als der Innendurchmesser der Kunststoffkabelumhüllung

Um die Kunststoffkabelumhüllung über die Aussenseite des rohrförmigen Kupplungsorgans drücken zu können, muss das Ende der Kunststoffkabelumhüllung unter Erwärmung erweitert werden, was zu einem hohen Kostenaufwand und zu Montagegeschwierigkeiten bei engen Kabelschächten führt. Schliesslich muss um die Erweiterung noch eine Andruckmutter angebracht werden, die auf die Aussenseite des erweiterten Teils der Kunststoffkabelumhüllung. aufgeschraubt wird.

Die Kosten zum Herstellen einer solchen Kunststoffkabelumhüllung mit einem mit einem Kabel zusammenwirkenden, ringförmigen Dichtungsorgan erfordert deshalb viel Arbeit und ist daher sehr teuer.

Ein anderer Nachteil ist, dass die Innenseite dieser bekannten Kunststoffkabelumhüllung nicht gas- und feuchtigkeitsdicht abgeschlossen werden kann, wenn kein Kabel in der Kunststoffkabelumhüllung vorhanden ist. Dieser Fall tritt jedoch auf, wenn mit einer Anzahl durch Gelenkverbindungen miteinander verbundener Kunststoffkabelumhüllungen gearbeitet wird.

Ein weiterer Nachteil dieser bekannten Kunststoffkabelumhüllung ist, dass der Innendurchmesser des rohrförmigen Kupplungsorgans viel kleiner ist als der Innendurchmesser der Kunststoffkabelumhüllung, so dass beim Durchziehen des Kabels durch solche Umhüllungen Störungen durch Festhaken des durchzuziehenden Kabels am rohrförmigen Kupplungsorgan auftreten können.

Aufgabe der Erfindung ist es, eine Kunststoffkabelumhüllung der oben erwähnten Art zu schaffen, die einfacher und billiger herstellbar ist und zugleich eine zuverlässige Abdichtung gewährleistet.

Diese Aufgabe wird erfindungsgemäss dadurch gelöst, dass das rohrförmige Kupplungsorgan von einer Überschiebemuffe mit einem Endrand in Form eines Stosskragens gebildet ist, an dem das stirnseitige Ende des Kunststoffrohres anliegt, daß die Überschiebemuffe einen Dichtungsring zwischen ihrer Innenseite und der Aussenseite des Kunststoffrohres aufweist und daß das Zugfestigkeit vermittelnde Organ zwischen der Aussenseite des Kunststoffrohres und der Innenseite der Überschiebemuffe angebracht ist.

Bei Anwendung einer Überschiebemuffe braucht man die Kunststoffkabelumhüllung nicht mit einer Erweiterung zu versehen und deshalb auch nicht zu erwärmen, was zu erheblichen Zeit- und Kosteneinsparungen führt. Ausserdem kann in sehr einfacher Weise eine gas- und feuchtigkeitsdichte zugfeste Verbindung zwischen der Innenseite der Überschiebemuffe und der Kunststoffkabelumhüllung hergestellt werden.

Vorteilhaft ist daß Innendurchmesser des Stosskragens im wesentlichen dem Innendurchmesser des Kunststoffrohres gleich ist, so dass die Gefahr des Festhakens beim Durchziehen eines Kabels an vorstehenden Teilen ausgeschlossen ist.

Zweckmässig bilden die aufrechten Aussparungswände der ringförmigen Aussparung mit dem Boden dieser Aussparung einen trapezförmigen Querschnitt, was zu einer sehr guten Dichtung führt.

Mit besonderem Vorteil ist das ringförmige Dichtungsorgan an beiden Seiten mit einer ringförmigen Erhöhung und mit einer axialen Durchgangsöffnung versehen, die sich von der Endfläche der einen Erhöhung zur Endfläche der anderen Erhöhung erstreckt, wobei die Aussenwände der Erhöhung an der Innenwand des Stosskragens bzw. Innenseite der Andruckmutter anliegen. Auf diese Weise bekommt man eine optimale Abdichtung der Innenseite der Kabelumhüllung mit einem darin aufgenommenen Kabel gegenüber der Umgebung.

Zweckmässig verwendet man ein axial geteiltes ringförmiges Dichtungsorgan, wobei vorzugsweise die Durchschneidungsebene des ringförmigen Organs zwei im Abstand voneinander gelegene axiale Schnitte, ausgehend vom Ende der Erhöhungen, umfasst, die miteinander durch einen in einer radialen Ebene verlaufenden Verbindungsschnitt im Ringkörper verbunden sind. Dies bietet die Möglichkeit, nach einem Durchziehen eines Kabels sehr einfach das ringförmige Dichtungsorgan anzubringen, das dann eine optimale Abdichtung wegen der sehr speziellen Teilung des ringförmigen Dichtungsorgans hervorruft.

Zweckmässig kann in der ringförmigen Aussparung auch eine geschlossene Abschlußscheibe aufgenommen sein, die zweckmässig mit einem Handhabungsorgan versehen ist. Dadurch ist es möglich, die noch nicht verwendeten Kunststoffkabelumhüllungen vor dem Einbringen eines Kabels feuchtigkeits- und gasdicht abzuschliessen, wobei die Entfernung der geschlossenen Schlußscheibe sehr einfach durch Ziehen am Handhabungsorgan erfolgt. Dieses Handhabungsorgan kann von einem Vorsprung gebildet sein, der ggf. mit einem Auge versehen ist.

Die Erfindung ist im folgenden anhand eines Ausführungsbeispiels in Verbindung mit der Zeichnung näher erläuert.

Es zeigen:

Fig. 1 einen Längsschnitt einer Kunststoffkabelumhüllung nach der Erfindung;

Fig. 2 eine Ansicht eines Teils eines ringförmigen Dichtungsorgans bei einer Kunststoffkabelumhüllung nach der Erfindung;

Fig. 3 eine Kunststoffkabelumhüllung nach der Erfindung mit einer Abschlußscheibe.

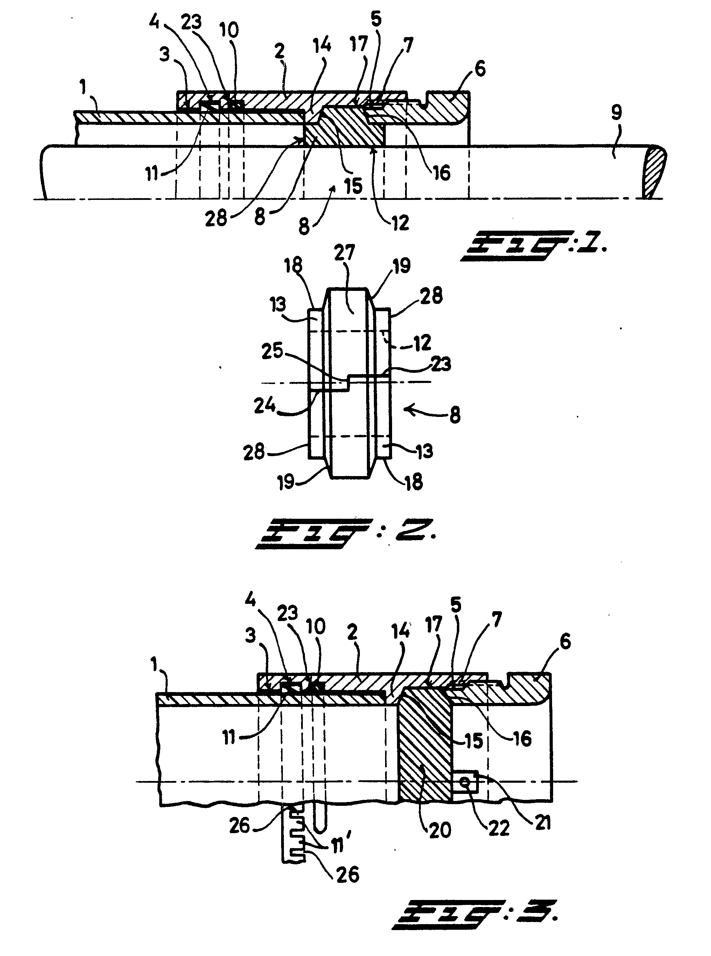

Fig. 1 zeigt eine Kunststoffkabelumhüllung, die ein Polyäthylen Kunststoffrohr 1 zur Aufnahme eines Kabels 9 zum Übertragen von Signalen umfasst. Das Kunststoffrohr 1 ist in einer ersten Aussparung 3 einer Überschiebemuffe 2 aufgenommen. Zwischen der Aussenseite des Kunststoffrohres 1 und der Innenseite der Muffe 2, die als rohrförmiges Kupplungsorgan dient, ist ein Dichtungsring 10 in einer Nut 23 angebracht, während in einer weiteren Nut 4 an der Innenseite ein Zugfestigkeit vermittelndes Kupplungsorgan 11 angebracht ist. Das Zugfestigkeit vermittelnde Organ 11 besteht vorteilhaft aus einem Ring mit schrägstehenden Lippen 11', die in Richtung des nächstliegenden freien Endes des Kunststoffrohres 1 geneigt sind Diese Lippen sind durch Anbringen von Schlitzen 26 in einem gebogenen Ring gebildet.

Die Muffe ist mit einem inneren Stosskragen 14 versehen, und das stirnseitige Ende des Kunststoffrohres 1 liegt an diesem Stosskragen an.

Die Muffe ist mit einer zweiten Aussparung 5 mit Innengewinde 7 zum Einschrauben einer Andruckmutter 6 versehen. Die Andruckmutter 6 ist mit einer Endwand versehen, die eine äussere Aussparungsendwand 16 bildet, während der Stosskragen 14 sich an eine innere Aussparungsendwand bzw. -wandfläche 15 anschliesst. Die Aussparungsendwände 15 und 16 bilden zusammen mit dem Boden 17 eine Nut zur Aufnahme eines ringförmigen Dichtungsorgans 8, das mit der Aussenseite eines Kabels 9, das insbesondere aus einem Glasfaserkabel besteht, in Dichtungseingriff bringbar ist.

Das ringförmige Dichtungsorgan 8 ist mit einem zentralen Durchgang 12 versehen, dessen Innendurchmesser dem Aussendurchmesser des Kabels 9 entspricht. Der kreisförmige Durchgang 12 wird durch die Endflächen 28 der ringförmigen Erhöhungen 13 begrenzt, die sich an den Körper 27 des ringförmigen Dichtungsorgans 8 anschliessen. Um das ringförmige Dichtungsorgan nach Durchziehen eines Kabels anbringen zu können, ist es unter Ausbildung zweier im Abstand voneinander gelegener axialer Schnitte 23 und 24 geteilt, die sich von den Endflächen 28 in den Körper 27 des Dichtungsorgans 8 erstrecken und miteinander durch einen Verbindungsschnitt 25 im Körper 27 des ringförmigen Dichtungsorgans 8 verbunden sind.

Der Aussendurchmesser der Aussenwände 18 der ringförmigen Erhöhungen 13, die sich, an die konisch verlaufenden Flächen 19 des Körpers 27 des ringförmigen Dichtungsorgans 8 anschliessen, ist im wesentlichen dem Innendurchmesser des inneren Stosskragens 14 und der Innenoberfläche der Andruckmutter 6 gleich.

Nach einer besonderen Ausführungsform kann der gesamte Querschnitt der Kabelumhüllung dadurch geschlossen werden, dass statt des ringförmigen Dichtungsorgans 8 mit dem Durchgang 12 eine Abschlußscheibe 20 verwendet wird, die mit einem Vorsprung 21 ggf. mit einem Auge 22 versehen sein kann, so dass nach Entfernen der Andruckmutter 6 die Abschlußscheibe 20 einfach abgenommen werden kann.

Die Muffe 2 und die Andruckmutter 6 bestehen vorzugsweise aus Metall, jedoch ist dies nicht zwingend.

**Patentansprüche**

1. Kunststoffkabelumhüllung, bestehend aus einem Kunststoffrohr (1) zur Aufnahme eines Kabels (9) zum Übertragen von Signalen, einem mit dem Kunststoffrohr (1) verbundenen, Zugfestigkeit vermittelnden rohrförmigen Kupplungsorgan mit einem mit einer Wand des Kunststoffrohres (1) zusammenwirkenden Endrand und mit einer ringförmigen Aussparung, die von einem Boden (17), einer inneren Aussparungswand (15) und einer äusseren Aussparungswand (16) begrenzt ist, die von einem stirnseitigen Ende einer mit der Wand des rohrförmigen Kupplungsorgans zusammenwirkenden, ein in der ringförmigen Aussparung aufgenommenen Dichtungsorgan (8) zwischen der inneren und der äusseren Aussparungswand (15, 16) zusammendrückenden Andruckmutter (6) gebildet ist, dadurch gekennzeichnet , dass das rohrförmige Kupplungsorgan von einer Überschiebemuffe (2) mit einem Endrand in Form eines Stosskragens (14) gebildet ist, an dem das stirnseitige Ende des Kunststoffrohres (1) anliegt, daß die Überschiebemuffe (2) einen Dichtungsring (10) zwischen ihrer Innenseite und der Aussenseite des Kunststoffrohres (1) aufweist und daß das Zugfestigkeit vermittelnde Organ (11) zwischen der Aussenseite des Kunststoffrohres (1) und der Innenseite der Überschiebemuffe (2) angebracht ist.

2. Kunststoffkabelumhüllung nach Anspruch 1, dadurch gekennzeichnet, dass der Innendurchmesser des Stosskragens (14) im wesentlichen gleich ist dem Innendurchmesser des Kunststoffrohres (1).

3. Kunststoffkabelumhüllung nach Anspruch 1 oder 2, dadurch gekennzeichnet, dass die aufrechten Aussparungswände (15, 16) der ringförmigen Aussparung mit dem Boden (17) einen trapezförmigen Querschnitt bilden.

4. Kunststoffkabelumhüllung nach einem der Ansprüche 1 bis 3, dadurch gekennzeichnet, dass der Innendurchmesser der Andruckmutter (6) im wesentlichen gleich ist dem Innendurchmesser des Kunststoffrohres (1).

5. Kunststoffkabelumhüllung nach einem der Ansprüche 1 bis 4, dadurch gekennzeichnet, dass das ringförmige Dichtungsorgan (8) an beiden Seiten mit einer ringförmigen Erhöhung (13) und mit einer axialen Durchgangsöffnung (12) versehen ist, die sich von der Endfläche (28) der einen Erhöhung (13) zur Endfläche (28) der anderen Erhöhung (13) erstreckt, und dass die Aussenwände (18) der Erhöhungen an der Innenwand des Stosskragens (14) bzw. Innenseite der Andruckmutter (6) anliegen.

6. Kunststoffkabelumhüllung nach Anspruch 5, dadurch gekennzeichnet, dass der Querschnitt zwischen der Aussenwand (18) der Erhöhung und dem Umfang des Körpers (27) des ringförmigen Dichtungsorgans (8) trapezförmig und der ringförmigen Aussparung (15, 16, 17) angepasst ist.

7. Kunststoffkabelumhüllung nach einem der Ansprüche 1 bis 6, dadurch gekennzeichnet, dass das ringförmige Dichtungsorgan (8) von einem geteilten ringförmigen Organ gebildet ist.

8. Kunststoffkabelumhüllung nach einem der Ansprüche 1 bis 7, dadurch gekennzeichnet, dass die Teilung des ringförmigen Dichtungsorgans (8) zwei im Abstand voneinander gelegene axiale Durchschneidungen (23, 24) umfasst, die miteinander durch einen Durchschneidungsverbindungsteil verbunden sind, der sich im Körper (27) des ringförmigen Dichtungsorgans erstreckt.

9. Kunststoffkabelumhüllung nach einem der Ansprüche 1 bis 4, dadurch gekennzeichnet, dass in der ringförmigen Aussparung eine geschlossene Abschlußscheibe (20) aufgenommen ist.

10. Kunststoffkabelumhüllung nach Anspruch 9, dadurch gekennzeichnet, dass die Abschlußscheibe mit einem Handhabungsorgan (21, 22) versehen ist.

## Claims

1. Plastics cable covering, consisting of a plastics tube (1) for receiving a cable (9) for the transmission of signals, a tubular coupling member, connected to the plastics tube (1), providing tensile strength and having an end edge interacting with a wall of the plastics tube (1) and an annular recess which is bounded by a base (17), an inner recess wall (15) and an outer recess wall (16), which is formed by a face end of a pressing nut (6), which interacts with the wall of the tubular coupling member and compresses a sealing member (8), accommodated in the annular recess, between the inner and the outer recess wall (15, 16), characterized in that the tubular coupling member is formed by a double socket (2), having an end edge in the form of a butt collar (14), against which the face end of the plastics tube (1) bears, in that the double socket (2) has a sealing ring (10) between its inside and the outside of the plastics tube (1) and in that the member (11) providing tensile strength is fitted between the outside of the plastics tube (1) and the inside of the double socket (2).

2. Plastics cable covering according to Claim 1, characterized in that the inside diameter of the butt collar (14) is substantially equal to the inside diameter of the plastics tube (1).

3. Plastics cable covering according to Claim 1 or 2, characterized in that the upright recess walls (15, 16) of the annular recess form a trapezoidal cross-section with the base (17).

4. Plastics cable covering according to one of Claims 1 to 3, characterized in that the inside diameter of the pressing nut (6) is substantially equal to the inside diameter of the plastics tube (1).

5. Plastics cable covering according to one of Claims 1 to 4, characterized in that the annular sealing member (8) is provided on both sides with an annular elevation (13) and with an axial passage (12), which extends from the end face (28) of the one elevation (13) to the end face (28) of the other elevation (13), and in that the outside walls (18) of the elevations bear against the inside wall of the butt collar and the inside of the pressing nut (6), respectively.

6. Plastics cable covering according to Claim 5, characterized in that the cross-section between the outside wall (18) of the elevation and the circumference of the body (27) of the annular sealing member (8) is trapezoidal and adapted to the annular recess (15, 16, 17).

7. Plastics cable covering according to one of Claims 1 to 6, characterized in that the annular sealing member (8) is formed by a divided annular member.

8. Plastics cable covering according to one of Claims 1 to 7, characterized in that the division of the annular sealing member (8) comprises two spaced-apart axial through-cuts (23, 24), which are joined to each other by a through-cut joining part, which extends in the body (27) of the annular sealing member.

9. Plastics cable covering according to one of Claims 1 to 4, characterized in that a closed end plate (20) is accommodated in the annular recess.

10. Plastics cable covering according to Claim 9, characterized in that the end plate is provided with a handling member (21, 22).

**Revendications**

1. Gaine de câble en matière plastique, composée d'un tube en matière plastique (1) destiné à recevoir un câble (9) pour la transmission de signaux, d'un organe de raccordement tubulaire, relié au tube en matière plastique (1) et établissant une liaison résistante à la traction, cet organe comprenant un bord d'extrémité qui coopère avec une paroi du tube en matière plastique (1), et une gorge annulaire qui est limitée par un fond (17), une paroi intérieure (15) de la gorge et une paroi extérieure (16) de la gorge, cette dernière paroi étant formée par une extrémité frontale d'un écrou de serrage (6) qui coopère avec la paroi de l'organe de raccordement tubulaire et qui comprime un organe d'étanchéité (8) logé dans la gorge annulaire, entre la paroi intérieure et la paroi extérieure (15, 16) de la gorge, caractérisée en ce que l'organe de raccordement tubulaire est formé par un manchon recouvrant (2) muni d'un bord d'extrémité qui présente la forme d'une collerette de butée (14) contre laquelle s'appuie l'extrémité frontale du tube en matière plastique (1), en ce que le manchon recouvrant (2) présente une bague d'étanchéité (10) interposée entre sa surface interne et la surface externe du tube en matière plastique (1), et en ce que l'organe (11) qui établit la liaison résistante à la traction, est agencé entre la surface externe du tube en matière plastique (1) et la surface interne du manchon recouvrant (2).

2. Gaine de câble en matière plastique selon la revendication 1, caractérisée en ce que le diamètre intérieur de la collerette de butée (14) est sensiblement égal au diamètre intérieur du tube en matière plastique (1).

3. Gaine de câble en matière plastique selon la revendication 1 ou 2, caractérisée en ce que les parois dressées (15, 16) de la gorge annulaire forment une section trapézoïdale en combinaison avec le fond (17).

4. Gaine de câble en matière plastique selon l'une des revendications 1 à 3, caractérisée en ce que le diamètre intérieur de l'écrou de serrage (6) est sensiblement égal au diamètre intérieur du tube en matière plastique (1).

5. Gaine de câble en matière plastique selon l'une des revendications 1 à 4, caractérisée en ce que l'organe d'étanchéité annulaire (8) est muni d'une protubérance annulaire (13) de chaque cité et d'une ouverture de passage axiale (12) qui s'étend de la surface d'extrémité (28) d'une protubérance (13) à la surface d'extrémité (28) de l'autre protubérance (13), et en ce que les parois externes (18) des protubérances s'appliquent, l'une contre la paroi interne de la collerette de butée et l'autre contre la surface interne de l'écrou de serrage (6).

6. Gaine de câble en matière plastique selon la revendication 5, caractérisée en ce que la section de la portion comprise entre la paroi externe (18) de la protubérance et la circonférence du corps (27) de l'organe d'étanchéité annulaire (8) est trapézoïdale et adaptée à la gorge annulaire (15, 16, 17).

7. Gaine de câble en matière plastique selon l'une des revendications 1 à 6, caractérisée en ce que l'organe d'étanchéité annulaire (8) est formé d'un organe annulaire segmenté.

8. Gaine de câble en matière plastique selon l'une des revendications 1 à 7, caractérisée en ce que la segmentation de l'organe d'étanchéité annulaire (8) est formée par deux coupures axiales (23, 24) espacées l'une de l'autre, et réunies l'une à l'autre par une partie de liaison des coupures, qui s'étend dans le corps (27) de l'organe d'étanchéité annulaire.

9. Gaine de câble en matière plastique selon l'une des revendications 1 à 4, caractérisée en ce qu'un disque obturateur plein (20) est logé dans la gorge annulaire.

10. Gaine de câble en matière plastique selon la revendication 9, caractérisée en ce que le disque obturateur est muni d'un organe de manipulation (21, 22).

FIG. 1.

FIG. 2.

FIG. 3.